# EUROPÄISCHE PATENTANMELDUNG

(11) **EP 4 663 587 A1**
(43) Veröffentlichungstag der Anmeldung: **17.12.2025**
(21) Anmeldenummer: 24181194.2
(22) Anmeldetag: 10.06.2024
(51) Int. Cl.: B65H 3/08, B65H 3/48, B65H 5/14

(54) **GREIFER, TRANSPORTVORRICHTUNG UND VERFAHREN ZUM AUFNEHMEN UND GREIFEN VON EINZELNEN BLATTFÖRMIGEN ELEKTRODEN**

(71) Anmelder: Grob-Werke GmbH & Co. KG, 87719 Mindelheim (DE)
(72) Erfinder: Janusch, Tim, 87746 Erkheim (DE); Hromada, Matthias, 87634 Obergünzburg (DE); Kaufmann, Tobias, 87662 Aufkirch (DE); Schatz, Tobias, 87730 Bad Grönenbach (DE)
(74) Vertreter: KASTEL Patentanwälte PartG mbB

(57) **Zusammenfassung**

Die Erfindung betrifft einen Greifer (10) zum Aufnehmen und Greifen von einzelnen blattförmigen Elektroden (50) im Zuge der Herstellung einer Batteriezelle, mit einer Saugvorrichtung (14) zum Ansaugen der jeweils zu greifenden Elektrode (50). Um ein prozesssicheres Zuführen aus einem Magazin vereinzelter Elektroden bei hoher Qualität des herzustellenden Batteriestapels zu ermöglichen schlägt die Erfindung gemäß einer Alternative vor, dass der Greifer (10) ein erstes Greifersegment (26.1) und ein zweites Greifersegment (26.2) aufweist, wobei die Saugvorrichtung (14) eine an dem ersten Greifersegment (26.1) angeordnete erste Saugeinrichtung (28.1) zum Ansaugen eines ersten Bereichs der zu greifenden Elektrode (50) und eine an dem zweiten Greifersegment (26.2) angeordnete zweite Saugeinrichtung (28.2) zum Ansaugen eines zweiten Bereichs der zu greifenden Elektrode (50) aufweist, wobei der Greifer (10) weiter eine Verschiebeeinheit (16) zum relativen Verschieben des ersten und zweiten Greifersegments (26.2, 26.2) mit wenigstens einer Richtungskomponente parallel zur Oberfläche der zu greifenden Elektrode (50) aufweist.

## Beschreibung

Die Erfindung betrifft einen Greifer zum Aufnehmen und Greifen von einzelnen blattförmigen Elektroden im Zuge der Herstellung einer Batteriezelle, mit einer Saugvorrichtung zum Ansaugen der jeweils zu greifenden Elektrode. Weiter betrifft die Erfindung eine Transportvorrichtung zum Aufnehmen und Transportieren von einzelnen blattförmigen Elektroden im Zuge der Herstellung einer Batteriezelle, welche Transportvorrichtung wenigstens einen solchen Greifer aufweist. Weiter betrifft die Erfindung ein Verfahren zum Aufnehmen und Greifen von einzelnen blattförmigen Elektroden im Zuge der Herstellung einer Batteriezelle sowie ein Computerprogramm mit Anweisungen zum Durchführen eines solchen Verfahrens.

Zum technologischen Hintergrund wird auf folgende Literaturstellen verwiesen:
[1] WO 2023/072343 A1
[2] EP 4 258 398 A1
[3] EP 4 258 402 A1
[4] JP 2017 152 075 A
[5] JP 2007 119 216 A
[6] EP 4 212 464 A1
[7] EP 2 064 594 A2
[8] CN 116924109 A

Ausgestaltungen der Erfindung finden auf dem Gebiet der Batteriezellproduktion bzw. Batterie-Stack-Montage Anwendung. Insbesondere betrifft die Erfindung Vorrichtungen und Verfahren zum Greifen von blattförmigen Elektroden. Eine besonders bevorzugte Anwendung ist die Vereinzelung von vormagazinierten Elektroden innerhalb eines Z-Falt-Prozesses, wie er beispielsweise in den Literaturstellen [1] bis [3] beschrieben und gezeigt ist.
[1] befasst sich mit einem "Verfahren und Vorrichtung zur Herstellung Z-gefalteter Zellstacks" und betrifft genauer ein Verfahren und eine Vorrichtung zur Herstellung Z-gefalteter Zellstacks, wobei eine Separatorbahn Z-förmig um wechselweise gestapelte erste und zweite Zellkomponente umgeschlagen wird. Um die Prozesszeit wesentlich zu verringern, ist vorgesehen, dass das Umschlagen beim Zuführen der jeweiligen Zellkomponente mittels eines an einem jeweiligen Greifer mitbewegend angeordneten Umschlagelement erfolgt.
[2] und [3] befassen sich mit einer "Vorrichtung und Verfahren zum Herstellen umwickelter Z-gefalteter Zellstacks", wobei eine Vorrichtung und ein Verfahren zum Umwickeln von insbesondere durch Z-Falten von Zellkomponenten, mehr insbesondere für eine Batteriezelle oder dergleichen, gebildeter Zellstacks verbessert werden sollen.

Im Bereich der Batterie-Stack-Montage findet häufig das Prinzip des Z-Faltens Anwendung. Um den Vereinzelungsprozess der Elektroden und den eigentlichen Stapelprozess des Batterie-Stacks zu entkoppeln, werden die Elektroden in Magazinen abgelegt und den einzelnen Stapelzellen zugeführt. Dabei zeigt sich als größte Herausforderung bei der (Rück-) Vereinzelung der magazinierten Elektroden eine Doppel- oder Mehrfachentnahme zu vermeiden

Die Literaturstellen [4] bis [8] stammen teils aus dem Bereich der Batteriezellproduktion, teils aus ganz anderen Technikbereichen und betreffen Maßnahmen, mit denen eine Mehrfachentnahme von Komponenten aus Magazinen oder dergleichen vermieden werden sollen. Die verwendeten Wirkmechanismen beschränken sich jedoch auf die Verwendung von Faltenbalgsaugern sowie Flächensauger. Eine Auffächerung der zu vereinzelnden Komponenten erfolgt oftmals durch Einblasen von Trennluft in die magazinierten Komponenten.

Um eine Mehrfachentnahme auf dem Gebiet der Batteriezellherstellung gezielt zu vermeiden, werden bei derzeitigen Lösungsansätzen folgende technische Ansätze verfolgt:
- Einblasen von Trennluft in den magazinierten Elektrodenstapel
- Verwendung von vollflächigen Sauggreifern, in Kombination mit einem "schüttelnden" Bewegungsprofil der Achse. Dabei erfolgt die Detektion der Mehrfachentnahme über sog. Doppellagensensoren.
- Mechanisches Zurückhalten durch Abstreifbleche.

Das Einblasen von Trennluft führt zu einer großräumigen Verteilung bzw. Emittierung von Partikeln in der Anlage. Besonders kritisch ist dabei im Falle der Batteriezellproduktion die Querkontamination zwischen Anode und Kathode. Ein Schüttelvorgang einer Greiferachse (im Sinne eines Bewegungsmechanismus/Aktor für einen Greifer) nimmt sehr viel Taktzeit in Anspruch, was im Widerspruch zu den wachsenden Anforderungen potenzieller Kunden bezüglich Taktzeit steht. Ein Einhalten dieser Anforderungen ist somit mit diesem Ansatz nicht möglich.

Ein Zurückhalten der Elektroden mit einem mechanischen Abstreifblech/einer mechanischen Rückhaltung führt im Falle einer Doppel- oder Mehrfachentnahme zur Beschädigung der Elektrode und zur massiven Freisetzung von Partikeln.

Die Erfindung hat sich zur Aufgabe gestellt, einen Greifer, eine Transportvorrichtung und ein Verfahren zum Aufnehmen und Halten oder Transportieren von blattförmigen Elektroden im Zuge der Herstellung von Batteriezellen derart zu verbessern, dass Mehrfachentnahmen unter Verbesserung der Qualität der herzustellenden Batteriezelle besser vermieden werden können.

Zum Lösen dieser Aufgabe schafft die Erfindung einen Greifer nach Anspruch 1 oder alternative Ausgestaltungen gemäß einer der im Folgenden wiedergegebenen Ausführungen unter Weglassen der in Anspruch 1 angegebenen Verschiebeeinheit. Eine mit einem solchen Greifer versehene Transportvorrichtung, ein Verfahren zum Aufnehmen von Elektroden und ein Computerprogramm mit Anweisungen zum Durchführen des Verfahrens sind Gegenstand der weiteren nebengeordneten Ansprüche.

Vorteilhafte Ausgestaltungen sind Gegenstand der Unteransprüche.

Die Erfindung schafft gemäß einer ersten Alternative einen Greifer zum Aufnehmen und Greifen von einzelnen blattförmigen Elektroden im Zuge der Herstellung einer Batteriezelle, mit einer Saugvorrichtung zum Ansaugen der jeweils zu greifenden Elektrode,
wobei der Greifer ein erstes Greifersegment und ein zweites Greifersegment aufweist,
wobei die Saugvorrichtung eine an dem ersten Greifersegment angeordnete erste Saugeinrichtung zum Ansaugen eines ersten Bereichs der zu greifenden Elektrode und eine an dem zweiten Greifersegment angeordnete zweite Saugeinrichtung zum Ansaugen eines zweiten Bereichs der zu greifenden Elektrode aufweist,
wobei der Greifer weiter eine Verschiebeeinheit zum relativen Verschieben des ersten und zweiten Greifersegments mit wenigstens einer Richtungskomponente parallel zur Oberfläche der zu greifenden Elektrode aufweist.

Die Verschiebeeinheit ermöglicht ein Verschieben der Greifersegmente in Richtung der Erstreckung der zu greifenden Elektrode. Durch die Verschiebeeinheit kann mit einfachen und sicheren Mitteln ein gezieltes Wölben der aufzunehmenden Elektrode erzielt werden. Das Wölben kann über die längere und über die kürzere Seite erfolgen, insbesondere wenn die Elektroden nahezu quadratisch sind.

Bei einigen Ausführungsformen ist die Verschiebeeinheit demnach zum relativen Verschieben des ersten und zweiten Greifersegments parallel zu einer Längserstreckungsrichtung der zu greifenden Elektrode ausgebildet, um die längere Seite zu wölben. Bei einigen Ausführungsformen ist die Verschiebeeinheit zum relativen Verschieben des ersten und zweiten Greifersegments parallel zu der anfänglichen Oberfläche der zu greifenden Elektrode und quer zur Längserstreckungsrichtung ausgebildet, um die kürzere Seite zu wölben.

Bei einigen Ausführungsformen ist vorgesehen, dass die Verschiebeeinheit eine Führungseinrichtung zum linearen relativen Führen des ersten und zweiten Greifersegments zueinander aufweist.

Bei einigen Ausführungsformen ist vorgesehen, dass die Verschiebeeinheit einen Aktor zum Antreiben der Verschiebebewegung aufweist.

Bei einigen Ausführungsformen ist vorgesehen, dass die Verschiebeeinheit eine an den Greifersegmenten ausgebildete interne Führung aufweist, die einen Vorsprung an einem der Greifersegmente und einen Rücksprung an dem anderen der Greifersegmente aufweist, wobei der Vorsprung formschlüssig in dem Rücksprung aufnehmbar ist.

Bei einigen Ausführungsformen ist vorgesehen, dass die Verschiebeeinheit eine externe Führung mit wenigstens einer Schiene aufweist, an der die Greifersegmente verschiebbar geführt sind.

Bei einigen Ausführungsformen ist vorgesehen, dass die Verschiebeeinheit ein Führungssystem aufweist, an dem das erste Greifersegment verschiebbar geführt ist und an dem das zweite Greifersegment verschiebbar geführt ist.

Bei einigen Ausführungsformen ist vorgesehen, dass die Verschiebeeinheit derart ausgebildet ist, dass die relative Verschiebung des ersten und zweiten Greifersegments nur in einer Ebene stattfindet.

Bei einigen Ausführungsformen der ersten Alternative ist vorgesehen, dass die Saugvorrichtung die mehreren Faltenbalgsauger zum punktuellen Ansaugen der Elektrode und das wenigstens eine Saugfeld zum flächigen Ansaugen der Elektrode aufweist.

Die Erfindung schafft gemäß einer zweiten Alternative einen Greifer zum Aufnehmen und Greifen von einzelnen blattförmigen Elektroden im Zuge der Herstellung einer Batteriezelle, mit einer Saugvorrichtung zum Ansaugen der jeweils zu greifenden Elektrode, wobei die Saugvorrichtung mehrere Faltenbalgsauger zum punktuellen Ansaugen der Elektrode und wenigstens ein Saugfeld zum flächigen Ansaugen der Elektrode aufweist.

Bei einigen Ausführungsformen sind die Merkmale der ersten und zweiten Alternative kumuliert vorgesehen.

Bei einigen Ausführungsformen ist vorgesehen, dass die Faltenbalgsauger dazu ausgebildet und angeordnet sind, durch punktuelles Ansaugen ein gezieltes Wölben der Elektrode zu erzeugen.

Bei einigen Ausführungsformen ist vorgesehen, dass die Faltenbalgsauger dazu ausgebildet und angeordnet sind, einzeln angesteuert zu werden.

Bei einigen Ausführungsformen ist vorgesehen, dass die Faltenbalgsauger wenigstens zu einem Teil an der ersten Saugeinrichtung ausgebildet sind.

Bei einigen Ausführungsformen ist vorgesehen, dass die Faltenbalgsauger wenigstens zu einem Teil an der zweiten Saugeinrichtung ausgebildet sind.

Bei einigen Ausführungsformen ist vorgesehen, dass die Faltenbalgsauger über das erste Greifersegment und das zweite Greifersegment verteilt sind.

Bei einigen Ausführungsformen ist vorgesehen, dass die erste Saugeinrichtung ein erstes Saugfeld aufweist.

Bei einigen Ausführungsformen ist vorgesehen, dass die zweite Saugeinrichtung ein zweites Saugfeld aufweist.

Bei einigen Ausführungsformen ist vorgesehen, dass das wenigstens eine Saugfeld dazu ausgebildet und eingerichtet ist, nach einer erfolgreichen Vereinzelung der zu greifenden Elektrode ein vollflächiges Greifen der Elektrode zu generieren.

Die Greifergeometrie richtet sich nach der zu greifenden Elektrode, insbesondere Elektrodenformat, Anordnung der Ableiterfahren etc.

Je nach Format kann bei einigen Ausführungsformen vorgesehen sein, dass die erste und zweite Saugeinrichtung im Wesentlichen gleich oder spiegelbildlich ausgebildet sind.

Einige Ausführungsformen des Greifers nach der ersten und/oder der zweiten Alternative weisen eine in den Greifer integrierte Düseneinheit auf, die dazu ausgebildet ist, an wenigstens einer Kante der zu greifenden Elektrode eine Luftströmung oder einen Luftimpuls unter einem vorbestimmten schrägen Winkel auszugeben.

Die Erfindung schafft gemäß einer dritten Alternative einen Greifer zum Aufnehmen und Greifen von einzelnen blattförmigen Elektroden im Zuge der Herstellung einer Batteriezelle, mit einer Saugvorrichtung zum Ansaugen der jeweils zu greifenden Elektrode und mit einer in den Greifer integrierte Düseneinheit, die dazu ausgebildet ist, an wenigstens einer Kante der zu greifenden Elektrode eine Luftströmung oder einen Luftimpuls unter einem vorbestimmten schrägen Winkel auszugeben.

Bei einigen Ausführungsformen ist ein Greifer vorgesehen, der die Merkmale der ersten und dritten Alternative kombiniert. Bei einigen Ausführungsformen ist ein Greifer vorgesehen, der die Merkmale der zweiten und dritten Alternative kombiniert. Bei einigen Ausführungsformen ist ein Greifer vorgesehen, der die Merkmale der ersten bis dritten Alternative kombiniert.

Bei einigen Ausführungsformen ist vorgesehen, dass die Düseneinheit eine Ringdüse ist oder aufweist, die dazu ausgebildet ist, die Luftströmung oder den Luftimpuls an jeder der Kanten am Umfang der zu greifenden Elektrode abzugeben.

Bei einigen Ausführungsformen ist vorgesehen, dass die Düseneinheit Schlitze seitlich versetzt zu der Saugvorrichtung aufweist.

Bei einigen Ausführungsformen ist vorgesehen, dass die Düseneinheit einen ersten Düsenbereich an dem ersten Greifersegment und einen zweiten Düsenbereich an dem zweiten Greifersegment aufweist.

Einige Ausführungsformen des Greifers nach der ersten, zweiten oder/und der dritten Alternative weisen einen Sensor zum Erfassen auf, ob eine einzelne oder mehrere Elektroden durch den Greifer aufgenommen worden sind.

Gemäß einem weiteren Aspekt schafft die Erfindung eine Transportvorrichtung zum Aufnehmen und Transportieren von einzelnen blattförmigen Elektroden im Zuge der Herstellung einer Batteriezelle, umfassend wenigstens einen Greifer nach einer der voranstehenden Ausgestaltungen, einen Bewegungsmechanismus zum Bewegen des Greifers und eine computerimplementierte Steuerung.

Gemäß einem weiteren Aspekt schafft die Erfindung ein Verfahren zum Aufnehmen und Greifen von einzelnen blattförmigen Elektroden im Zuge der Herstellung einer Batteriezelle gemäß den im Folgenden wiedergegebenen Alternativen.

Derzeit wird die erste Alternative des Verfahrens bevorzugt, weswegen sie auch Gegenstand des derzeitigen Anspruchssatzes ist. Die hiesige Offenbarung umfasst aber auch die weiter unten stehenden weiteren Alternativen und zwar jeweils alleine als auch in beliebiger Kombination untereinander.

Gemäß der ersten Alternative für das Verfahren schafft die Erfindung ein Verfahren zum Aufnehmen und Greifen von einzelnen blattförmigen Elektroden im Zuge der Herstellung einer Batteriezelle, umfassend:
Ansaugen eines ersten Bereichs der Elektrode mit einer ersten Saugeinrichtung und Ansaugen eines zweiten Bereichs der Elektrode mit einer zweiten Saugeinrichtung und relatives Verschieben der ersten und zweiten Saugeinrichtung mit wenigstens einer Richtungskomponente parallel zur blattförmigen Erstreckung der Elektrode, um die Elektrode zum Vereinzeln gezielt zu wölben.

Insbesondere erfolgt das relative Verschieben der ersten und zweiten Saugeinrichtung in Richtung der (anfänglichen) Erstreckung der zu greifenden Elektrode. Durch das relative Verschieben kann mit einfachen und sicheren Mitteln ein gezieltes Wölben der aufzunehmenden Elektrode erzielt werden. Das Wölben kann über die längere und über die kürzere Seite erfolgen, insbesondere wenn die Elektroden nahezu quadratisch sind.

Bei einigen Ausführungsformen erfolgt das relative Verschieben der ersten und zweiten Saugeinrichtung parallel zu einer Längserstreckungsrichtung der zu greifenden Elektrode, um die längere Seite zu wölben. Bei einigen Ausführungsformen erfolgt das relative Verschieben der ersten und zweiten Saugeinrichtung parallel zu der anfänglichen Oberfläche der zu greifenden Elektrode und zwar quer zur Längserstreckungsrichtung, um die kürzere Seite zu wölben.

Vorzugsweise umfasst das Verfahren den Schritt:
punktuelles Ansaugen der Elektrode derart, dass bereits beim Ansaugen eine Wölbung der Elektrode erzeugt wird.

Gemäß der zweiten Alternative für das Verfahren schafft die Erfindung ein Verfahren zum Aufnehmen und Greifen von einzelnen blattförmigen Elektroden im Zuge der Herstellung einer Batteriezelle, umfassend:
punktuelles Ansaugen der Elektrode derart, dass bereits beim Ansaugen eine Wölbung der Elektrode erzeugt wird.

Dies kann alternativ oder zusätzlich zu dem relativen Verschieben erfolgen.

Vorzugsweise umfasst das Verfahren gemäß der ersten und/oder zweiten Alternative den zusätzlichen Schritt:
Schräges Anblasen wenigstens einer, mehrerer oder aller der Kanten der Elektrode, um eine daran anhaftende weitere Elektrode zu lösen.

Gemäß der dritten Alternative für das Verfahren schafft die Erfindung ein Verfahren zum Aufnehmen und Greifen von einzelnen blattförmigen Elektroden im Zuge der Herstellung einer Batteriezelle, umfassend:
Ansaugen der Elektrode und
Schräges Anblasen wenigstens einer, mehrerer oder aller der Kanten der Elektrode, um eine daran anhaftende weitere Elektrode zu lösen.

Bevorzugte Ausgestaltungen des Verfahren gemäß einer oder mehrerer der voranstehenden Alternative umfassen den weiteren Schritt:
Erfassen, ob die gegriffene Elektrode erfolgreich vereinzelt worden ist und abhängig davon flächiges Ansaugen der Elektrode, wenn diese erfolgreich vereinzelt worden ist und/oder Transportieren der Elektrode erst, wenn diese erfolgreich vereinzelt worden ist.

Vorzugsweise wird das Verfahren nach einer oder mehrerer der voranstehenden Alternativen und Ausgestaltungen, durchgeführt mit einem Greifer oder der Transportvorrichtung nach einer oder mehrerer der oben wiedergegebenen Alternativen oder Ausgestaltungen.

Gemäß einem weiteren Aspekt schafft die Erfindung ein Computerprogramm umfassend Anweisungen, die einen Greifer oder eine Transportvorrichtung einer oder mehrerer der voranstehenden Alternative oder Ausgestaltungen dazu veranlassen, das Verfahren nach einer oder mehrerer der voranstehenden Alternativen oder Ausgestaltungen durchzuführen.

Bevorzugte Ausgestaltungen der Erfindung finden auf dem Gebiet der Herstellung einer Batteriezelle, insbesondere durch Z-Falten Verwendung. Besonders bevorzugt werden Ausgestaltungen der Erfindung in Vorrichtungen und Verfahren verwendet, wie sie in den Literaturstellen [1] bis [3] beschrieben worden sind, um Kathoden oder Anoden zuzuführen. Die Kathodengreifer können hierbei anders als die Anodengreifer ausgebildet sein.

Besondere Ausgestaltungen betreffen einen Verschiebegreifer, bei dem unterschiedliche Segmente zueinander verschoben werden können, um gezielt ein Wölben der damit gegriffenen Elektrode zu bewirken.

Alternativ oder zusätzlich sind weitere Maßnahmen zur Vermeidung einer Mehrfachentnahme von Elektroden aus den jeweiligen Magazinen vorgesehen.

Bevorzugte Ausgestaltungen der Erfindung haben wenigstens einen, mehrere oder alle der folgenden Vorteile:
- Durch die Vermeidung eines "schüttelnden" Bewegungsprofil ist keine zusätzliche Zeit für die Separierung der Elektroden notwendig,
- Eine mechanische Beschädigung der Elektroden kann durch den Wegfall der mechanischen Rückhaltung verhindert werden,
- Die geringe Prozessstabilität aufgrund Doppel- oder Mehrfachentnahmen und Sonderabläufe bei einer Doppel- oder Mehrfachentnahme werden verhindert.

Mit bevorzugten Ausgestaltungen der Erfindung lässt sich ein prozesssicherer, bauteilschonender und gleichzeitig dynamischer Vereinzelungsprozess vormagazinierter Elektroden realisieren.

Bevorzugte Ausgestaltungen der Erfindung erfüllen eine, mehrere oder alle der folgenden Anforderungen:
- ein prozesssicheres und hochdynamisches Vereinzeln der Elektroden sicherzustellen,
- eines oder mehrere der im folgenden Punkt wiedergegebenen Wirkprinzipien zur Vereinzelung der Elektroden an die Anforderungen und Bedürfnisse des Vereinzelungsprozesses des jeweiligen der beiden Elektrodentypen, d.h. Anode und Kathode anzupassen,
- eines oder mehrere der folgenden Wirkprinzipien sind konstruktiv in die zur Verfügung stehenden räumlichen Verhältnisse eines Vereinzelungsgreifers zu implementieren:
   o ein Faltenbalgsauger (punktuelles Ansaugen)
   ∘ ein Saugfeld (flächiges Ansaugen)
   ∘ eine Ringdüse
   ∘ eine Verschiebeeinheit (Verschieben von Greifersegmenten, wie insbesondere von Greiferhälften zueinander)
   ∘ Doppellagensensor,
- die Vielfalt an verschiedenen Anoden und Kathoden Materialien (vorrangig Dicke und Beschichtung), bei gleichbleibender Vereinzelungsqualität handhaben zu können.

Bei bevorzugten Ausgestaltungen der Erfindung werden die vormagazinierten Anoden- und Kathodeneinzelsheets mit einzelnen oder einer Kombination aus verschiedenen Wirkmechanismen prozesssicher vereinzelt.

Bei einer Doppel- oder Mehrfachentnahme ist schlichtweg das Anhaften der Elektroden aneinander der Kern der Problemstellung.

Bei dieser Problemstellung kann die umgebende Luft nicht in ausreichender Geschwindigkeit zwischen die Einzelsheets einströmen und für ein Ablösen der Elektroden sorgen.

Das oder die im Greifer implementierte(n) System(e) sorgt/sorgen dafür, dass ein Einströmen der Luft zwischen die Einzelsheets ermöglicht wird.

Elektrostatische Anhaftungen werden in diesem Falle getrennt betrachtet und durch die Verwendung von Ionisierungsvorrichtungen entfernt, diese sind bei einigen Ausführungsformen zusätzlich vorgesehen.

Einige Vorteile einiger Ausführungsformen sind:
- Durch die Vermeidung eines "schüttelnden" Bewegungsprofil ist keine zusätzliche Zeit für die Separierung der Elektroden notwendig,
- Eine mechanische Beschädigung der Elektroden kann durch den Wegfall der mechanischen Rückhaltung verhindert werden,
- Die Emittierung von Partikeln kann somit stark reduziert werden,
- Durch die Vielzahl an Wirkmechanismen, welche konstruktiv vorgesehen sind, kann durch verschiedene Kombinationen auf die jeweiligen Anforderungen der Elektroden (Anode/Kathode) bzw. auf deren Aufbau (Dicke, Beschichtung, etc.) reagiert werden, ohne ein Wechsel des Systems vornehmen zu müssen,
- Realisierung eines prozesssicheren, bauteilschonenden und gleichzeitig dynamischen Vereinzelungsprozesses vormagazinierter Elektroden.

Insbesondere verfolgen Systeme (Greifer, Verfahren, Transportvorrichtungen, Anlagen zur Herstellung mittels Z-Falten, ...) gemäß besonders bevorzugten Ausführungsformen der Erfindung Wirkprinzipien, die einzeln oder in Kombinationen zur Vermeidung von Doppel- oder Mehrfachentnahmen angewendet werden können.

Zusammenfassung der Systeme und deren Wirkprinzipien (Physikalisch) in jeweils bevorzugter Ausgestaltung:
- Faltenbalgsauger (punktuelles Ansaugen)
   ∘ Durch eine punktuelle Ansaugung der obersten Elektrode wird ein gezieltes Wölben der Elektrode erzeugt
   ∘ Der dadurch entstehenden Schäleffekt auf die darunterliegenden Elektroden sorgt für eine Verbesserung der Lufteinströmung dazwischen
- Saugfeld (flächiges Ansaugen)
   ∘ Nachdem eine erfolgreiche Vereinzelung erfolgt ist, kann durch das Saugfeld ein vollflächiges Greifen der Elektrode generiert werden
   ∘ Der Transport der Elektrode zum Stapeltisch kann somit bauteilschonender (Vermeidung von strömungsbedingtem Flattern der Elektrode beim Transport von der Entnahmeposition zur Stapelposition) durchgeführt werden
- Ringdüse (Beispiel für eine Einrichtung zum schrägen Einblasen an den umliegenden Seiten der Elektrode)
   ∘ Durch eine eingearbeitete Ringdüse kann unter einem bestimmten Winkel eine Luftströmung bzw. ein Luftimpuls auf die Kante bzw. Kanten der entnommenen Elektroden gegeben werden
   ∘ Durch diesen Effekt wird im Falle einer Doppel- bzw. Mehrfachentnahme zum einen Luft zwischen die Elektroden eingeblasen, wodurch sich ein Lösen der Elektroden beschleunigt und zum anderen wird durch das Ausströmen der Luft ein Wirbel unterhalb der Elektroden erzeugt, wodurch ein lokaler Bereich niedrigen Drucks erzeugt wird, was die zusätzlich entnommenen Elektroden zurück in Richtung des Magazins saugt
- Verschiebeeinheit
   ∘ Die Verschiebeeinheit hat, ähnlich den Faltenbalgsauger, das Ziel eine gezielte Wölbung der Elektroden zu erzeugen (Schäleffekt ausbilden → Luft nachströmen)
   ∘ Die Amplitude der Wölbung kann durch den Verfahrweg der Verschiebeeinheit (Parallelgreifer) eingestellt und auf die jeweilige Elektrodenkonfiguration feinjustiert werden
   ∘ In Kombination mit den Faltenbalgsauger kann die Kontur der Wölbung bestimmt werden (Amplitudenanzahl, Hochpunkte, Tiefpunkte, Krümmungsradien, etc.)
- Doppellagensensor
   ∘ Der Doppellagensensor dient als Kontrollsystem
   ∘ Erst bei der Freigabe durch den Sensor (keine Doppellage vorhanden) ist ein Verfahren der Achse in Richtung der Stapelposition zulässig
   ∘ Dadurch kann sichergestellt werden, dass die zusätzlich entnommenen Elektroden wieder zurück ins Magazin fallen können

Ausführungsbeispiele werden im Folgenden anhand der beigefügten Zeichnungen näher erläutert. Darin zeigt:
- Fig. 1: eine perspektivische Ansicht einer Ausführungsform eines Greifers zum Aufnehmen und Halten von blattförmigen Elektroden im Zuge der Herstellung von Batterien, wobei in unterschiedlicher Kombination mögliche Einheiten und insbesondere Komponenten einer optionalen Verschiebeeinheit erläutert sind;
- Fig. 2: eine weitere perspektivische Ansicht des Greifers, wobei weitere Komponenten zum Verschieben gezeigt sind und schematisch eine Transportvorrichtung und eine Steuerung dargestellt sind;
- Fig. 3: die Ansicht wie in Fig. 1 zur Verdeutlichung unterschiedlicher Einheiten zum Ansaugen der zu greifenden Elektrode;
- Fig. 4: die Ansicht wie in Fig. 1 zur Verdeutlichung einer Ausführungsform einer in den Greifer integrierten Düseneinheit;
- Fig. 5: eine stark schematisierte Schnittansicht durch einen Teil der Düseneinheit mit Andeutung des Greifers und doppelt daran anhaftenden Elektroden zur Verdeutlichung einer Wirkweise der Düseneinheit und
- Fig. 6: eine Ansicht wie in Fig. 5 zur Verdeutlichung einer weiteren Wirkweise der Düseneinheit.

In den Figuren sind bevorzugte Ausführungen eines Greifers 10 sowie einer damit versehenen Transportvorrichtung 12 dargestellt. Der Greifer 10 ist zum Aufnehmen und Greifen von einzelnen blattförmigen Elektroden im Zuge der Herstellung einer Batteriezelle ausgebildet und mit einer Saugvorrichtung 14 zum Ansaugen der jeweils zu greifenden Elektrode versehen.

Der Greifer 10 und die Transportvorrichtung 12 sind zur Verwendung in der Großserienproduktion von Batterieeinheiten, insbesondere durch Z-Falten, eingerichtet, wie dies beispielsweise in den Literaturstellen [1] bis [3] beschrieben und gezeigt wird. Derartige Produktionen werden in sehr schneller Taktung durchgeführt. Der Greifer 10 ist jeweils dazu eingerichtet, eine der Elektrodenarten - Kathode oder Anode - in der jeweils vorliegenden Konfiguration aus einem Magazin (nicht dargestellt) zu entnehmen und der Z-Faltung zuzuführen.

Bei der bevorzugten Ausführungsform des Greifers 10 wie dargestellt sind eine Verschiebeeinheit 16, unterschiedliche Saugeinheiten 18, 20 der Saugvorrichtung 14 zum punktuellen und flächigen Ansaugen in unterschiedlichen Stadien des Greifvorganges, eine Düseneinheit 22 zum Entfernen einer weiteren Elektrode sowie ein Doppellagensensor 24 integriert. Die vorgenannten Einheiten 16, 18, 20, 22, 24 bewirken jeweils einzeln oder in Kombination, dass eine Aufnahme von mehr als einer blattförmigen Elektrode in prozesssicherer und bauteilschonender Weise vermieden wird. Je nach Ausführung der Elektrode und des Greifvorganges sind bei anderen, hier nicht näher dargestellten Greifern einige der vorgenannten Wirkprinzipien weggelassen oder in anderer Weise kombiniert.

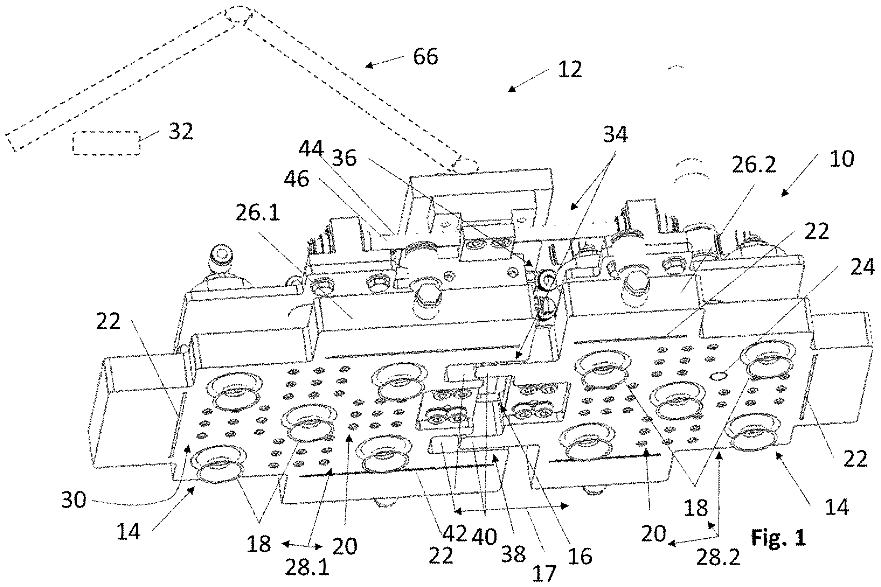

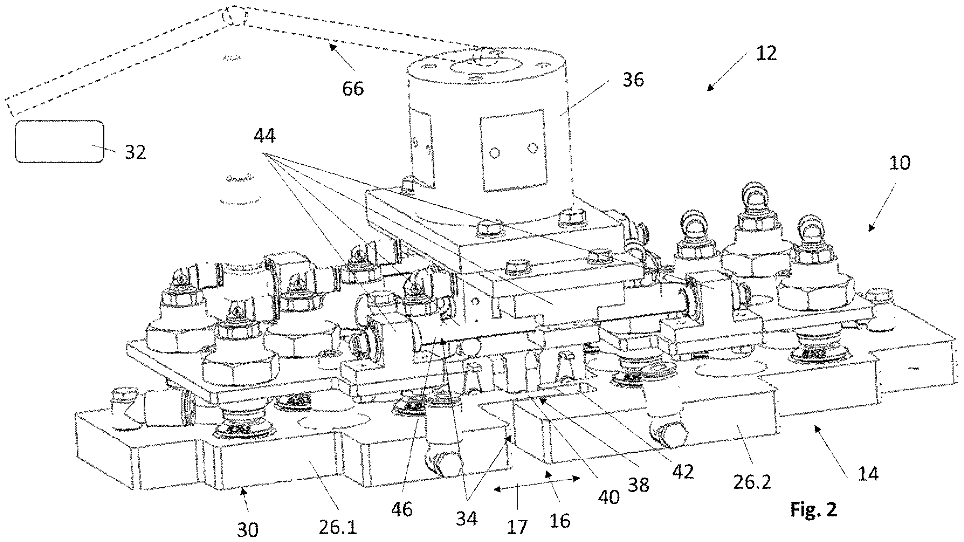

Im Folgenden werden bevorzugte Ausgestaltungen der Verschiebeeinheit 14 anhand der Darstellung in den Fig. 1 und 2 näher erläutert.

Der Greifer 10 weist ein erstes Greifersegment 26.1 und ein zweites Greifersegment 26.2 auf. Die Greifersegmente 26-1, 26.2 können beispielsweise als Greiferhälften ausgebildet sein. Bei anderen nicht dargestellten Ausführungsformen sind das erste und das zweite Greifersegment 26.1, 26.2 nicht in etwa gleich auf dem Greifer verteilt, sondern unterschiedlich groß ausgebildet. Das Design der Greifersegmente 26.1, 26.2 richtet sich nach der jeweils zu greifenden Elektrode und wird auf diese optimiert.

Die Saugvorrichtung 14 weist eine an dem ersten Greifersegment 26.1 angeordnete erste Saugeinrichtung 28.1 zum Ansaugen eines ersten Bereichs der zu greifenden Elektrode und eine an dem zweiten Greifersegment 26.2 angeordnete zweite Saugeinrichtung 28.2 zum Ansaugen eines zweiten Bereichs der zu greifenden Elektrode auf. Mögliche Konstruktionen der jeweiligen Saugeinrichtungen 28.1, 28.2 werden weiter unten bei der Erläuterung der unterschiedlichen Saugeinheiten 18, 20 näher erläutert.

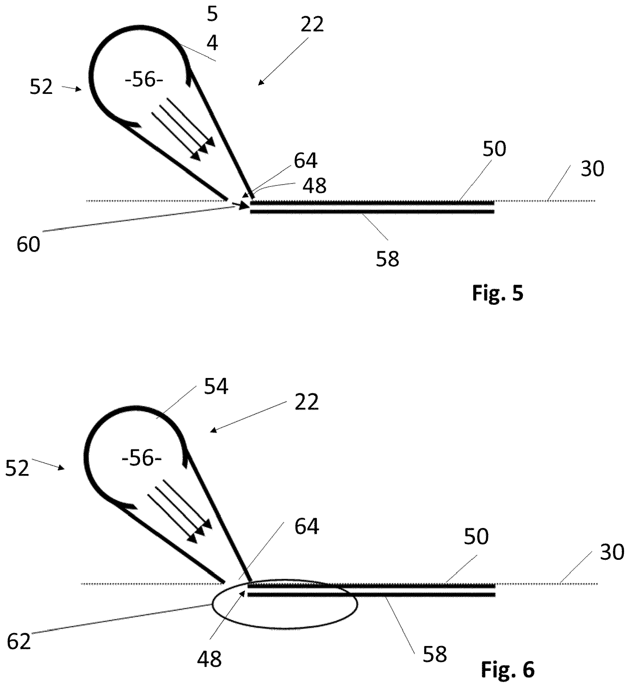

Der Greifer 10 weist weiter die Verschiebeeinheit 16 zum relativen Verschieben des ersten und zweiten Greifersegments 26.1, 26.2 auf. Die Verschiebeeinheit 16 ist dazu eingerichtet, die Greifersegmente 26.1, 26.2 mit wenigstens einer Richtungskomponente parallel zur Erstreckungsebene der zu greifenden Elektrode zu verschieben. Die Verschiebebewegung ist in Fig. 1 mit dem Pfeil 17 dargestellt. Bei den dargestellten Ausführungsformen weist der Greifer 10 eine Greifseite - beispielsweise die Unterseite des Greifers 10 im Betrieb - auf, an der die Saugvorrichtung 14 ausgebildet ist und an der die Elektrode zu halten ist. In Fig. 5 und 6 wird diese Unterseite als eine Greiferebene 30 verdeutlicht. Die Verschiebeeinheit 16 ist bei dieser Ausgestaltung insbesondere dazu ausgebildet, die Greifersegmente 26.1, 26.2 relativ zueinander parallel zu der Greifseite - Greiferebene 30 - zu bewegen. Beispielsweise kann die Relativbewegung in Richtung der Längsseite der zu greifenden Elektrode oder in Richtung der kürzeren Seite der zu greifenden Elektrode gerichtet sein. Insbesondere ist die Verschiebebewegung 17 eine lineare Bewegung.

Durch ein relatives Bewegen der Greifersegmente 26.1, 26.2 bei Anhaften des ersten und zweiten Bereichs der Elektrode kann diese gezielt gewölbt werden.

Das relative Bewegen kann durch geeignete Aktoren 36 und eine in Fig. 2 angedeutete Steuerung 32 - computerimplementiert, mit Prozessor und Speicher, in dem ein Computerprogramm geladen ist - initiiert werden. So kann rein durch Anpassung der Steuerungsparameter das Wölben gezielt auf die jeweilige Elektrode abgestimmt werden.

Die Verschiebeeinheit 16 ermöglicht, die zwei Greiferhälften - Beispiel für Greifersegmente 26.1, 26.2 - zueinander zu bewegen, und dadurch eine Wölbung der angesaugten Elektrode, bzw. im Falle einer Doppel- oder Mehrfachentnahme der angesaugten Elektroden zu erzeugen.

Gemäß Fig. 1 und 2 weist die Verschiebeeinheit 16 eine Führungseinrichtung 34 zum linearen relativen Führen des ersten und zweiten Greifersegments 26.1, 26.2 zueinander auf. Weiter weist die Verschiebeeinheit 16 einen Aktor zum Antreiben der Verschiebebewegung auf. Die Führungseinrichtung 34 weist eine an den Greifersegmenten 26.1, 26.2 ausgebildete interne Führung 38 auf, die bei der dargestellten Ausführung einen Vorsprung 40 an einem der Greifersegmente 26.1, 26.2 und einen Rücksprung 42 an dem anderen der Greifersegmente 26.1, 26.2 auf, so dass der Vorsprung 40 formschlüssig in dem Rücksprung 42 aufnehmbar ist.

Zusätzlich zur "internen" Führung 38 der Verschiebeeinheit 16 (Parallelgreifer) ist eine externes Rundführungssystem 44 zur Erhöhung der Gesamtsteifigkeit des Systems vorgesehen. Beispielsweise weist die Führungseinrichtung 34 eine externe Führung mit wenigstens einer Schiene 46 auf, an der die Greifersegmente 26.1, 26.2 verschiebbar geführt sind.

Bei diesem Rundführungssystem 44 handelt es sich konstruktiv um Standardkomponenten. Die Aufgabe dieses externen Führungssystems 44 besteht darin, die interne Führung 38 des Parallelgreifers zu entlasten, und das Gesamtsystem auszusteifen. Als Resultat soll die Verschiebung der Greiferhälften zueinander nur in der Ebene stattfinden.

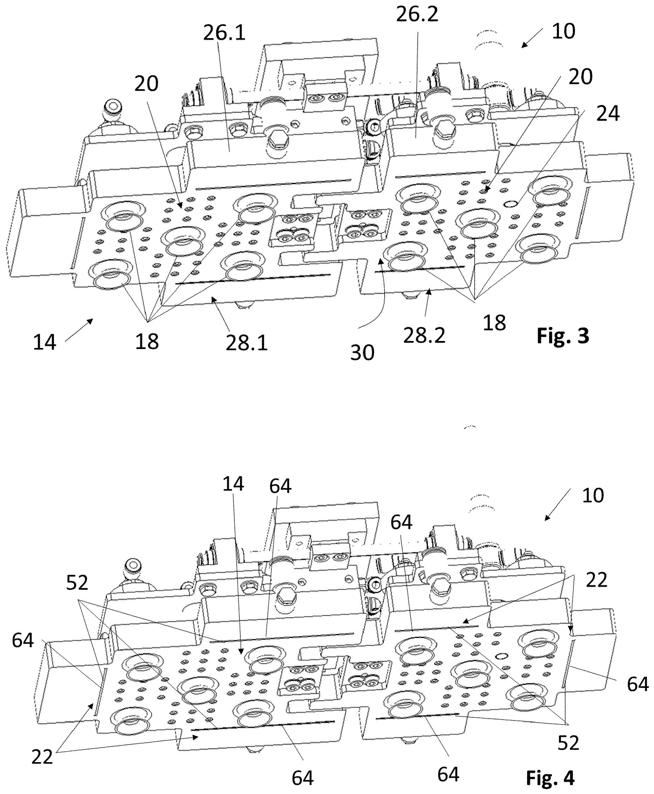

Gemäß Fig. 3 weist die Saugvorrichtung 14 mehrere Faltenbalgsauger 18 zum punktuellen Ansaugen der Elektrode und wenigstens ein Saugfeld 20 zum flächigen Ansaugen der Elektrode auf.

Die Faltenbalgsauger 18 sind dazu ausgebildet und angeordnet, einzeln angesteuert zu werden und durch punktuelles Ansaugen ein gezieltes Wölben der Elektrode zu erzeugen. Bei der dargestellten Ausführungsform sind einige der Faltenbalgsauger 18 an der ersten Saugeinrichtung 28.1 angeordnet, und weitere der Faltenbalgsauger 18 sind an der zweiten Saugeinrichtung 28.2 angeordnet, beispielsweise sind die Faltenbalgsauger 18 über die Greifersegmente 26.1, 26.2 verteilt

Die Faltenbalgsauger 18 ermöglichen verschiedene Varianten an Wölbungen. Die dargestellte Ausführungsform zeigt jeweils fünf Faltenbalgsauger 18 je Greiferhälfte. Die Faltenbalgsauger 18 können - gesteuert über die Steuerung 32 - individuell angesteuert werden, wodurch verschiedenste "Schäleffekte" zur Ablösung der Elektroden generiert werden können. Zudem kann durch das Zusammenziehen der Faltenbalgsauger 18 eine Übergabe der vereinzelten Elektrode an das Saugfeld 20 vorgenommen werden. Dadurch können für den anschließenden Transport der vereinzelten Elektrode zur Stapelposition der Effekt des Luftwiderstands und die daraus resultierenden "Flatter-Effekte" drastisch reduziert werden.

Als Einheit zum flächigen Ansaugen weist die Saugvorrichtung 14 wenigstens ein Saugfeld 20 auf. Bei der dargestellten Ausführung weisen sowohl die erste Saugeinrichtung 28.1 als auch die zweite Saugeinrichtung 28.2 jeweils ein Saugfeld 20 auf. Das Design des oder der Saugfelder 20 richtet sich ebenfalls nach der zu greifenden Elektrode. Bei der dargestellten Ausführung sind die Saugfelder 20 der ersten und zweiten Saugeinrichtung 28.1, 28,2 im Wesentlichen gleich oder spiegelbildlich ausgebildet.

Das wenigstens eine Saugfeld 20 ist entsprechend mit einer Vakuumquelle (nicht dargestellt z.B. Pumpe mit Ventilen) versehen und durch die Steuerung 32 gesteuert und dadurch so ausgebildet und eingerichtet, nach einer erfolgreichen Vereinzelung der zu greifenden Elektrode ein vollflächiges Greifen der Elektrode zu generieren.

Beispielsweise ist das Saugfeld 20 durch eine perforierte Fläche (z.B. Lochblech, Feld von Bohrungen) an der Unterseite eines Greiferkörpers (genauer je eines Greiferkörpers jedes Greifersegments 26.1, 26.2) gebildet, wobei die Öffnungen/Bohrungen des Saugfelds 20 in eine Vakuumkammer münden, in der gesteuert durch die Steuerung 32 ein Unterdruck erzeugt wird oder nicht.

Das Saugfeld 20 stellt den meist verwendeten, derzeitigen Stand der Technik dar (Vollflächiges Greifen der Elektrode durch Vakuum mittels Flächengreifer) und ist somit grundsätzlich bekannt und wird daher hier nicht weiter beschrieben.

Das Saugfeld 20 kann bei dem hier beschriebenen Greifer-System zum einen als Transporthilfe einer bereits durch andere Wirkprinzipien vereinzelten Elektrode dienen (siehe obige Beschreibung zum Faltenbalgsauger).

Zum anderen kann durch das wenigstens eine Saugfeld 20 oder die mehreren Saugfelder 20 eine weitere Kombinationsmöglichkeit zur Verbesserung des Vereinzelungsvorgangs und zur Vermeidung von Doppel- oder Mehrfachentnahmen geschaffen werden. Bei der dargestellten Ausführungsform können die Saugfelder 20 der beiden Greiferhälften unabhängig voneinander angesteuert und betrieben werden.

Im Folgenden wird anhand der Darstellung der Fig. 4 bis 6 eine Ausführungsform der Düseneinheit 22 näher beschrieben. Die Düseneinheit 22 ist in den Greifer 10 integriert und dazu ausgebildet ist, an wenigstens einer Kante 48 der zu greifenden Elektrode 50 eine Luftströmung oder einen Luftimpuls unter einem vorbestimmten schrägen Winkel auszugeben.

in den Fig. 5 und 6 ist der Greifer 10 durch eine schematische Darstellung der Greiferebene 30 - also dem hier ebenen Bereich, wo die Elektrode 50 anhaftet oder sich mit anderen Worten die Saugvorrichtung 14 befindet - angedeutet. In dem Greiferkörper, an dem die Greiferebene 30 ausgebildet ist, ist die Düseneinheit 22 z.B. als Ringdüse 52 ausgebildet. Insbesondere ist die Düseneinheit 30 als umlaufende Ringdüse 52 entlang der Außengeometrie der Elektrode 50 ausgebildet. In einen beispielsweise ringsum laufenden Luftkanal 54 wird Blasluft 56 geleitet und zu der Kante 48 der anhaftenden Elektrode 58 so geleitet, dass diese unter einem Winkel schräg angeströmt wird. In den Fig. 5 und 6 wird eine Doppelentnahme angenommen, wobei noch eine weitere Elektrode 58 an der zu greifenden Elektrode 50 anhaftet.

Die Fig. 5 und 6 zeigen eine Detailansicht der Düseneinheit 22 zur Erläuterung der dabei auftretenden Effekte. In Fig. 5 ist ein erster Effekt dargestellt. Durch die Düseneinheit 22 wird eine Luftströmung 60 zwischen den Elektrodensheets 50, 58 erzeugt. In Fig. 6 ist ein zweiter Effekt dargestellt. In dem eingekringelten Bereich bildet sich eine Unterdruckbereich 62 oder ein Sog der weiteren Elektrode 58 nach unten auf. Dies beruht auf dem Bernoulli-Effekt bzw. einer Grenzschichtablösung. Bei den dargestellten Ausführungsformen ist die Düseneinheit 22 demnach eine Ringdüse 52 oder weist eine solche auf. Die Ringdüse 52 ist dazu ausgebildet, die Luftströmung 60 oder den Luftimpuls an jeder der Kanten 48 am Umfang der zu greifenden Elektrode 50 abzugeben.

Bei den dargestellten Ausführungsformen weist die Düseneinheit 22 Schlitze 64 seitlich versetzt zu der Saugvorrichtung 14 auf. Wenn der Greifer 10 die Verschiebeinheit 16 und eine Aufteilung in mehrere Segmente 26.1, 26.2 aufweist, weist die Düseneinheit 22 insbesondere einen ersten Düsenbereich an dem ersten Greifersegment 26.1 und einen zweiten Düsenbereich an dem zweiten Greifersegment 26.2 auf.

Die Ringdüse 52 sorgt mittels eines unter einem bestimmten Winkel einströmenden Luftstroms 60 bzw. Luftimpuls für ein beschleunigtes Einströmen der Luft zwischen den Elektrodensheets 50, 58 bei einer Doppel- oder Mehrfachentnahme, woraus die Separierung der Elektroden resultiert, siehe Fig. 5.

Zudem wird aufgrund des Bernoulli-Effekts bzw. der Grenzschichtablösung der austretenden Luft ein Bereich 62 lokalen Unterdrucks erzeugt, wodurch die fälschlicherweise entnommenen Elektroden 58 in Richtung des Magazins gesaugt werden, siehe Fig. 6.

Vorstehend sind unterschiedliche Maßnahmen beschrieben worden, um eine Doppel- oder Mehrfachentnahme auch bei schnellen Prozessen prozesssicher und schonend zu vermeiden. Als bevorzugte Maßnahme ist die Verschiebeeinheit 16 vorgesehen, weswegen Ausführungsformen mit der Verschiebeeinheit 16 derzeit bevorzugt sind. Aber auch die anderen Maßnahmen sind alternativ oder kumuliert zu der Verschiebeeinheit 16 je nach Art und Ausbildung der Elektrode bei anderen Ausführungen vorzusehen.

In Fig. 2 ist noch die Transportvorrichtung 12 schematisch dargestellt, die den Greifer 10, einen Bewegungsmechanismus 66, z.B. Portalachsen oder einen Roboterarm, zur Bewegung des Greifers 10 und die Steuerung 32 aufweist. Die Transportvorrichtung 12 ist bei einigen Ausführungsformen dazu ausgebildet, Elektroden dem aus [1] bis [3] bekannten Prozess zuzuführen.

Im Betrieb lässt sich das folgende Verfahren, insbesondere mittels Anweisungen des Computerprogramms automatisch gesteuert, durchführen.

Das Verfahren dient zum Aufnehmen und Greifen von einzelnen blattförmigen Elektroden 50 im Zuge der Herstellung einer Batteriezelle, und umfasst Ansaugen der Elektrode 50 und
a) Ansaugen eines ersten Bereichs der Elektrode 50 mit einer ersten Saugeinrichtung 28,1 und Ansaugen eines zweiten Bereichs der Elektrode 50 mit einer zweiten Saugeinrichtung 28.2 und relatives Verschieben der ersten und zweiten Saugeinrichtung 28,1, 28.2 mit wenigstens einer Richtungskomponente parallel zur blattförmigen Erstreckung der Elektrode 50, um die Elektrode 50 zum Vereinzeln gezielt zu wölben, und/oder
b) punktuelles Ansaugen der Elektrode 50 derart, dass bereits beim Ansaugen eine Wölbung der Elektrode 50 erzeugt wird und/oder
c) Schräges Anblasen wenigstens einer, mehrerer oder aller der Kanten 48 der Elektrode 50, um eine daran anhaftende weitere Elektrode 58 zu lösen.

Mittels des Doppellagensensors 24 oder eines sonstigen Sensors zum Erfassen, ob eine einzelne oder mehrere Elektroden durch den Greifer 10 aufgenommen worden sind, lässt sich feststellen, ob erfolgreich nur eine einzelne Elektrode 50 aufgenommen worden ist.

Bei einigen Ausführungsformen umfasst das Verfahren somit den Schritt: Erfassen, ob die gegriffene Elektrode 50 erfolgreich vereinzelt worden ist und abhängig davon flächiges Ansaugen der Elektrode 50, wenn diese erfolgreich vereinzelt worden ist und/oder Transportieren der Elektrode 50 erst, wenn diese erfolgreich vereinzelt worden ist.

### Bezugszeichenliste:

- 10: Greifer
- 12: Transportvorrichtung
- 14: Saugvorrichtung
- 16: Verschiebeeinheit
- 17: Verschiebebewegung
- 18: Faltenbalgsauger (Beispiel für eine Saugeinheit zum punktuellen Ansaugen)
- 20: Saugfeld (Beispiel für eine Saugeinheit zum flächigen Ansaugen)
- 22: Düseneinheit
- 24: Doppellagensensor
- 26.1: erstes Greifersegment
- 26.2: zweites Greifersegment
- 28.1: erste Saugeinrichtung
- 28.2: zweite Saugeinrichtung
- 30: Greiferebene
- 32: Steuerung
- 34: Führungseinrichtung
- 36: Aktor
- 38: interne Führung
- 40: Vorsprung
- 42: Rücksprung
- 44: Rundführungssystem (Beispiel für externe Führung)
- 46: Schiene
- 48: Kante
- 50: zu greifende Elektrode
- 52: Ringdüse
- 54: Luftkanal
- 56: Blasluft
- 58: anhaftende Elektrode
- 60: Luftströmung
- 62: Unterdruckbereich
- 64: Schlitz
- 66: Bewegungsmechanismus

## Patentansprüche

1. Greifer (10) zum Aufnehmen und Greifen von einzelnen blattförmigen Elektroden (50) im Zuge der Herstellung einer Batteriezelle, mit einer Saugvorrichtung (14) zum Ansaugen der jeweils zu greifenden Elektrode (50), wobei der Greifer (10) ein erstes Greifersegment (26.1) und ein zweites Greifersegment (26.2) aufweist,
wobei die Saugvorrichtung (14) eine an dem ersten Greifersegment (26.1) angeordnete erste Saugeinrichtung (28.1) zum Ansaugen eines ersten Bereichs der zu greifenden Elektrode (50) und eine an dem zweiten Greifersegment (26.2) angeordnete zweite Saugeinrichtung (28.2) zum Ansaugen eines zweiten Bereichs der zu greifenden Elektrode (50) aufweist,
wobei der Greifer (10) weiter eine Verschiebeeinheit (16) zum relativen Verschieben des ersten und zweiten Greifersegments (26.2, 26.2) mit wenigstens einer Richtungskomponente parallel zur Oberfläche der zu greifenden Elektrode (50) aufweist.

2. Greifer (10) nach Anspruch 1, **dadurch gekennzeichnet,**
**dass** die Verschiebeeinheit (16)
2.1 eine Führungseinrichtung (34) zum linearen relativen Führen des ersten und zweiten Greifersegments (26.1, 26.2) zueinander aufweist,
2.2 einen Aktor (36) zum Antreiben der Verschiebebewegung aufweist,
2.3 eine an den Greifersegmenten (26.1, 26.2) ausgebildete interne Führung (38) aufweist, die einen Vorsprung (40) an einem der Greifersegmente (26.1) und einen Rücksprung (42) an dem anderen der Greifersegmente (26.2) aufweist, wobei der Vorsprung (40) formschlüssig in dem Rücksprung (42) aufnehmbar ist;
2.4 eine externe Führung (44) mit wenigstens einer Schiene (46) aufweist, an der die Greifersegmente (26.1, 26.2) verschiebbar geführt sind;
2.5 ein Führungssystem (38, 44) aufweist, an dem das erste Greifersegment (26.1) verschiebbar geführt ist und an dem das zweite Greifersegment (26.2) verschiebbar geführt ist,
2.6 derart ausgebildet ist, dass die relative Verschiebung des ersten und zweiten Greifersegments (26.1, 26.2) nur in einer Ebene stattfindet.

3. Greifer nach einem der voranstehenden Ansprüche, **dadurch gekennzeichnet,**
**dass** die Saugvorrichtung (14)
3.1 mehrere Faltenbalgsauger (18) zum punktuellen Ansaugen der Elektrode (50) und/oder
3.2 wenigstens ein Saugfeld (20) zum flächigen Ansaugen der Elektrode (50) aufweist.

4. Greifer (10) nach Anspruch 3, **dadurch gekennzeichnet,**
**dass** die Faltenbalgsauger (18)
4.1 dazu ausgebildet und angeordnet sind, durch punktuelles Ansaugen ein gezieltes Wölben der Elektrode (50) zu erzeugen; und/oder
4.2 dazu ausgebildet und angeordnet sind, einzeln angesteuert zu werden;
4.3 wenigstens zu einem Teil an der ersten Saugeinrichtung (28.1) ausgebildet sind; und/oder
4.4 wenigstens zu einem Teil an der zweiten Saugeinrichtung (28.2) ausgebildet sind; und/oder
4.5 über das erste Greifersegment (26.2) und das zweite Greifersegment (26.2) verteilt sind.

5. Greifer (10) nach einem der Ansprüche 3 oder 4, **dadurch gekennzeichnet, dass**
5.1 die erste Saugeinrichtung (28.1) ein erstes Saugfeld (20) aufweist; und/oder
5.2 die zweite Saugeinrichtung (28.2) ein zweites Saugfeld (20) aufweist; und/oder
5.3 das wenigstens eine Saugfeld (20) dazu ausgebildet und eingerichtet ist, nach einer erfolgreichen Vereinzelung der zu greifenden Elektrode (50) ein vollflächiges Greifen der Elektrode (50) zu generieren; und/oder
5.4 dass die erste und zweite Saugeinrichtung (28.1, 28.2) im Wesentlichen gleich oder spiegelbildlich ausgebildet sind.

6. Greifer (10) nach einem der voranstehenden Ansprüche, **gekennzeichnet durch** eine in den Greifer (10) integrierte Düseneinheit (22), die dazu ausgebildet ist, an wenigstens einer Kante (48) der zu greifenden Elektrode (50) eine Luftströmung (60) oder einen Luftimpuls unter einem vorbestimmten schrägen Winkel auszugeben.

7. Greifer (10) nach Anspruch 6, **dadurch gekennzeichnet,**
**dass** die Düseneinheit (22)
7.1 eine Ringdüse (52) ist oder aufweist, die dazu ausgebildet ist, die Luftströmung (60) oder den Luftimpuls an jeder der Kanten (48) am Umfang der zu greifenden Elektrode (50) abzugeben; und/oder
7.2 Schlitze (64) seitlich versetzt zu der Saugvorrichtung (14) aufweist; und/oder
7.3 einen ersten Düsenbereich an dem ersten Greifersegment (26.1) und einen zweiten Düsenbereich (26.2) an dem zweiten Greifersegment aufweist.

8. Greifer (10) nach einem der voranstehenden Ansprüche, **gekennzeichnet durch** einen Sensor (24) zum Erfassen, ob eine einzelne oder mehrere Elektroden (50, 58) **durch** den Greifer (10) aufgenommen worden sind.

9. Transportvorrichtung (12) zum Aufnehmen und Transportieren von einzelnen blattförmigen Elektroden (50) im Zuge der Herstellung einer Batteriezelle, umfassend wenigstens einen Greifer (10) nach einem der voranstehenden Ansprüche, einen Bewegungsmechanismus (66) zum Bewegen des Greifers (10) und eine computerimplementierte Steuerung (32).

10. Verfahren zum Aufnehmen und Greifen von einzelnen blattförmigen Elektroden (50) im Zuge der Herstellung einer Batteriezelle, umfassend:
Ansaugen eines ersten Bereichs der Elektrode (50) mit einer ersten Saugeinrichtung (28.1) und Ansaugen eines zweiten Bereichs der Elektrode (50) mit einer zweiten Saugeinrichtung (28.2) und relatives Verschieben der ersten und zweiten Saugeinrichtung (28.1, 28.2) mit wenigstens einer Richtungskomponente parallel zur blattförmigen Erstreckung der Elektrode (50), um die Elektrode (50) zum Vereinzeln gezielt zu wölben.

11. Verfahren nach Anspruch 10, umfassend:
punktuelles Ansaugen der Elektrode (50) derart, dass bereits beim Ansaugen eine Wölbung der Elektrode (50) erzeugt wird.

12. Verfahren nach einem der Ansprüche 10 oder 11, umfassend:
Schräges Anblasen wenigstens einer, mehrerer oder aller der Kanten (48) der Elektrode (50), um eine daran anhaftende weitere Elektrode (58) zu lösen.

13. Verfahren nach einem der Ansprüche 10 bis 12, umfassend:
Erfassen, ob die gegriffene Elektrode (50) erfolgreich vereinzelt worden ist und abhängig davon
13.1 flächiges Ansaugen der Elektrode (50), wenn diese erfolgreich vereinzelt worden ist und/oder
13.2 Transportieren der Elektrode (50) erst, wenn diese erfolgreich vereinzelt worden ist.

14. Verfahren nach einem der Ansprüche 10 bis 13, durchgeführt mit einem Greifer (10) nach einem der Ansprüche 1 bis 8 oder mit einer Transportvorrichtung (12) nach Anspruch 9.

15. Computerprogramm umfassend Anweisungen, die einen Greifer (10) nach einem der Ansprüche 1 bis 8 oder eine Transportvorrichtung (12) nach Anspruch 9 dazu veranlassen, das Verfahren nach einem der Ansprüche 10 bis 13 durchzuführen.
